Europäisches Patentamt

European Patent Office

Office européen des brevets

(19)

(11) **EP 0 944 498 B1**

(12) **EUROPÄISCHE PATENTSCHRIFT**

(45) Veröffentlichungstag und Bekanntmachung des Hinweises auf die Patenterteilung:
**15.02.2006 Patentblatt 2006/07**

(21) Anmeldenummer: **98951234.8**

(22) Anmeldetag: **29.08.1998**

(51) Int Cl.:
*B60R 16/02* *(2006.01)*

(86) Internationale Anmeldenummer:
**PCT/DE1998/002546**

(87) Internationale Veröffentlichungsnummer:
**WO 1999/016643 (08.04.1999 Gazette 1999/14)**

(54) **ELEKTRONISCHE FAHRWIDERSTANDSERKENNUNG ZUR BESTIMMUNG EINER DEN FAHRWIDERSTAND BEI EINEM KRAFTFAHRZEUG REPRÄSENTIERENDEN GRÖSSE**

ELECTRONICAL DRIVE RESISTANCE DETECTION FOR DETERMINING A VARIABLE REPRESENTING THE DRIVE RESISTANCE OF A MOTOR VEHICLE

DETECTION DE LA RESISTANCE A L'AVANCEMENT ELECTRONIQUE POUR LA DETERMINATION D'UNE GRANDEUR REPRESENTANT LA RESISTANCE A L'AVANCEMENT POUR UN VEHICULE AUTOMOBILE

(84) Benannte Vertragsstaaten:
**DE FR GB IT SE**

(30) Priorität: **30.09.1997 DE 19743059**

(43) Veröffentlichungstag der Anmeldung:
**29.09.1999 Patentblatt 1999/39**

(73) Patentinhaber: **ROBERT BOSCH GMBH**
**70442 Stuttgart (DE)**

(72) Erfinder:
 • **LÖFFLER, Jürgen**
 **D-71364 Winnenden (DE)**
 • **FREI, Rasmus**
 **D-71638 Ludwigsburg (DE)**
 • **STEIGER-PISCHKE, Andrea**
 **D-71287 Weissach (DE)**

 • **BOLZ, Martin-Peter**
 **D-71720 Oberstenfeld (DE)**
 • **POLJANSEK, Marko**
 **D-72768 Reutlingen (DE)**
 • **HERMSEN, Wolfgang**
 **D-63110 Rodgau (DE)**
 • **HÜLSER, Holger**
 **D-70329 Stuttgart (DE)**

(56) Entgegenhaltungen:
 EP-A- 0 532 957    DE-A- 3 018 032
 DE-A- 4 010 104    DE-A- 4 138 822
 US-A- 5 231 897    US-A- 5 465 208

 • **ROBERT BOSCH GMBH:**
 **"KRAFTFAHRTECHNISCHES TASCHENBUCH"**
 **1991, VDI-VERLAG , DÜSSELDORF (DE) * Seiten**
 **322-329 * * Seiten 536-537 ***

EP 0 944 498 B1

**Beschreibung**

Stand der Technik

Die Erfindung betrifft eine elektronische Fahr widerstands-erkennüng zur Bestimmung einer den Fahrwiderstand bei einem Kraftfahrzeug repräsentierenden Größe mit den Merkmalen des Oberbegriffs des Anspruchs 1.

Im Antriebstrang eines Kraftfahrzeuge sind unterschiedliche Bauelemente angeordnet wie der Fahrzeugmotor, Motornebenaggregate (z.B. Stromgenerator, Klimaanlage), eine Kupplung, ein Drehmomentenwandler, ein in seiner Übersetzung veränderbares Getriebe, ein Differentialgetriebe-und/oder die angetriebenen Fahrzeugräder. Zur Optimierung der Antriebstrangsteuerung ist es erforderlich, Informationen über den aktuellen Lastzustand beziehungsweise den aktuellen Fahrwiderstand des Fahrzeuges zu verwenden. Ein erhöhter Fahrwiderstand stellt sich beispielsweise beim Fahren an Steigungen und bei Veränderung des Luftwiderstandsbeiwertes des Fahrzeuges ein. Ein erhöhter Fahrwiderstand erzeugt eine Fahrsituation, auf die die Steuerung des Antriebstrangs in geeigneter Weise reagieren soll. Insbesondere ist eine Anpassung der Strategie zur Übersetzungsbestimmung vorteilhaft.

Elektronische Getriebesteuerungen verfügen über Algorithmen zur Last- bzw. Fahrwiderstandserkennung. Abhängig von der erkannten Last beziehungsweise dem erkannten Fahrwiderstand werden Schaltkennlinien verschoben und/oder weitere Maßnahmen zur Vermeidung von Pendelschaltungen eingeleitet. Zur Erkennung wird beispielsweise ein Vergleich der tatsächlichen Fahrzeuglängsbeschleunigung mit der erwarteten Fahrzeuglängsbeschleunigung vorgenommen. Dazu ist die erwartete Fahrzeuglängsbeschleunigung zu bestimmen.

Die Patentschrift DE 30 18 032 A1 (US 4,625,590) beschreibt ein Verfahren, bei dem die erwartete Fahrzeuglängsbeschleunigung mit Hilfe des Abtriebsmomentes bestimmt wird. Dabei wird der Wirkungsgrad des Antriebstrangs berücksichtigt. Das so bestimmte Ergebnis ist jedoch nur im stationären Fahrbetrieb korrekt, da die zur Beschleunigung und Verzögerung von Rotationsmassen im Antriebstrang erforderlichen Momente nicht berücksichtigt werden.

In der DE 41 38 822 A1 (US 5,557,519) ist ein Verfahren beschrieben, bei dem die Masse des Fahrzeuges um eine "Rotationsmasse" erhöht wird, um diesen Effekt auszugleichen. Diese Vorgehensweise erfordert jedoch eine gangabhängige Korrektur dieser "Rotationsmasse".

Aus der DE 40 10 104 A1 ist ein Schaltkontrollsystem bekannt, bei dem der Fahrwiderstand eines Fahrzeuges ermittelt wird. Hiezu wird ein Fahrzeugbeschleunigungssignal auf Basis der Änderung der Fahrzeuggeschwindigkeit hergeleitet. Eine aus der Beschleunigung abgeleiteten Funktion wird mit einer Referenzfunktion verglichen, die einen linearen Widerstand darstellt und aus einem mittleren Drosselklappenstellungssignal abgeleitet wird.

Aus der EP 0 532 957 A2 ist, dem Oberbegriff des Anspruchs 1 entsprechend, ein Steuersystem für ein automatisches Getriebe bekannt, bei dem ein Beschleunigungswert des Fahrzeuges für einen speziellen Gang in Abhängigkeit von der Drosselklappenstellung und der Motordrehzahl vorausberechnet wird. Aus den gleichen Größen wird ein aktueller Wert der Fahrzeugbeschleunigung für diesen Gang berechnet. Aus einem Vergleich der vorausgesagten Beschleunigung mit der aktuellen Beschleunigung wird auf die Fahrbahnsteigung geschlossen und auf entsprechende Schaltkennfelder umgeschaltet.

Die Aufgabe der vorliegenden Erfindung besteht darin, mit möglichst wenig Applikationsaufwand den aktuellen Fahrwiderstand sehr genau zu bestimmen.

Diese Aufgabe wird durch die Merkmale des Anspruchs 1 gelöst.

Eine vorteilhafte Ausgestaltung der Erfindung ist Gegenstand des abhängigen Anspruchs.

Vorteile der Erfindung

Wie erwähnt geht die Erfindung aus von einem Kraftfahrzeug mit einem Antriebstrang, wobei die Elemente des Antriebstrangs rotierbar sind. Als solche Elemente sind der Fahrzeugmotor, die Motornebenaggregate, die Kupplung, der Drehmomentenwandler, das in seiner Übersetzung veränderbare Getriebe, das Differentialgetriebe und/oder die Fahrzeugräder zu nennen. Die Bestimmung einer den Fahrwiderstand repräsentierenden Größe geschieht nun derart, daß eine die momentane Beschleunigung des Fahrzeugs repräsentierende Beschleunigungsgröße erfaßt wird. Weiterhin wird eine Referenzgröße für die Beschleunigung des Fahrzeugs ermittelt und die den Fahrwiderstand repräsentierende Größe wird abhängig von einem Vergleich der erfaßten Beschleunigungsgröße mit der ermittelten Referenzgröße bestimmt. In Teilermittlungen die den im Antriebsstrang angeordneten Elementen angeordnet sind, werden die Rotationsmomente allen im Antriebstrang angeordneten Elemente es mittelt. Die Ermittlung der Referenzgröße geschieht erfindungsgemäß abhängig von den ermittelten Rotationsmomenten. Dabei ist vorgesehen, daß die Rotationsmomente einzelner Elemente, die im Antriebstrang angeordnet sind, separat ermittelt werden.

Durch die Berücksichtigung des zur Verzögerung oder Beschleunigung jeder einzelnen Komponente des Antriebstrangs erforderlichen Momentes kann der Fahrwiderstand sehr genau bestimmt werden. Die separate Berücksichtigung jeder einzelnen Komponente des Antriebstrang erlaubt eine einfache Variantenbildung. So muß z.B. bei einer Änderung der Übersetzungsstufen des verbauten Getriebes lediglich der Teil der erfindungegemäßen Ermittlung der Rotationsgröße modifiziert werden, der die Komponente "Getriebe" betrifft. Eine Anpassung globaler Kenngrößen ist nicht erforderlich.

Besonders vorteilhaft ist es, daß Drehbewegungsgrößen, die die momentanen Drehbewegung der im Antriebstrang angeordneten Elemente repräsentieren, erfaßt werden. Die jeweilige Rotationegröße wird dann in Abhängigkeit von der erfaßten momentanen Drehbewegung des jeweiligen Elements ermittelt. Insbesondere ist dabei vorgesehen, daß die Drehbewegungsgrößen die momentanen Drehgeschwindigkeiten der Elemente erfassen.

Durch die Berücksichtigung der Drehbewegungen der einzelnen Komponeten, die i.a. für die einzelnen Komponenten unterschiedlich sind, wird der Fahrwiderstand bestimmt. Es entfällt somit eine Applikation empirischer Kenngrößen. Dadurch wird der Applikationsaufwand reduziert.

Weiterhin ist es vorteilhaft, daß die Ermittlung der Referenzgröße derart geschieht, daß abhängig von den ermittelten Rotationsgrößen eine Radantriebsmomentengröße, die das von den Rädern abgegebene Moment repräsentiert gebildet wird.

Zeichnung

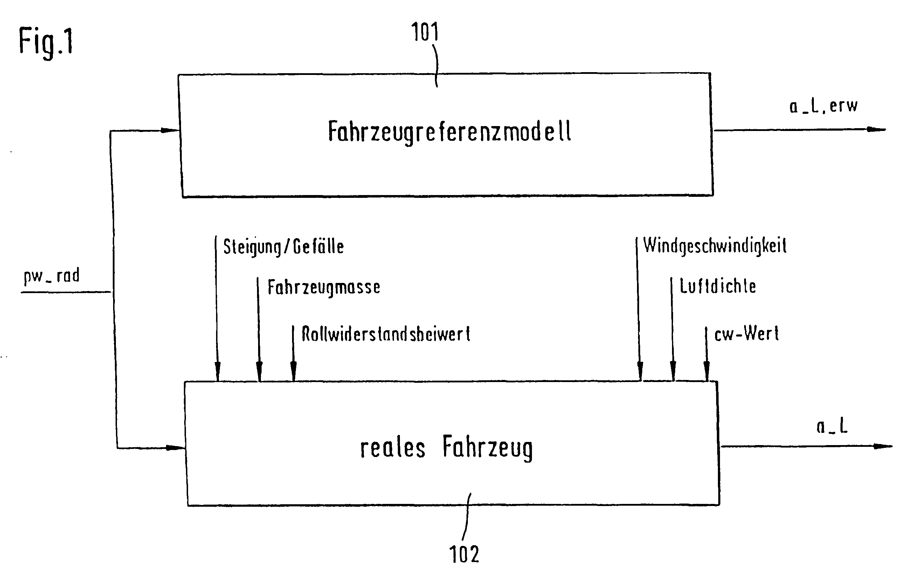

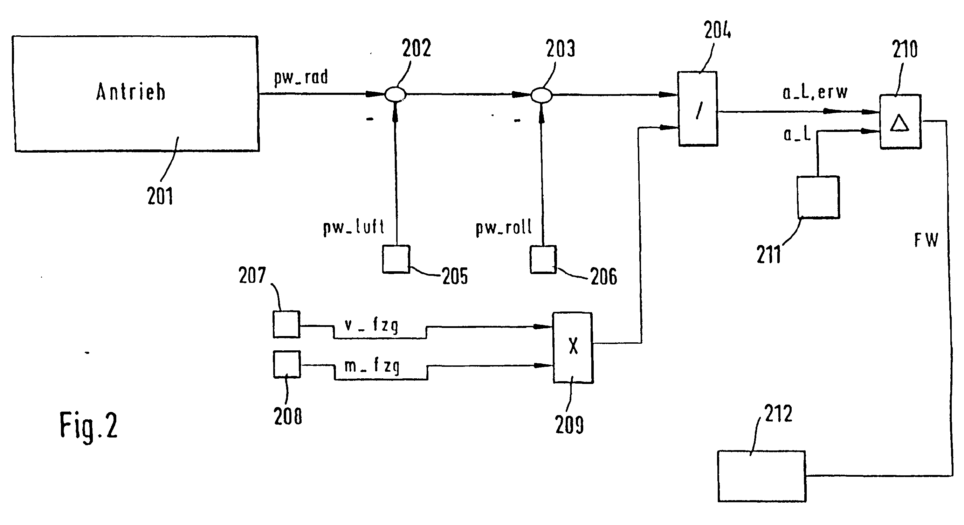

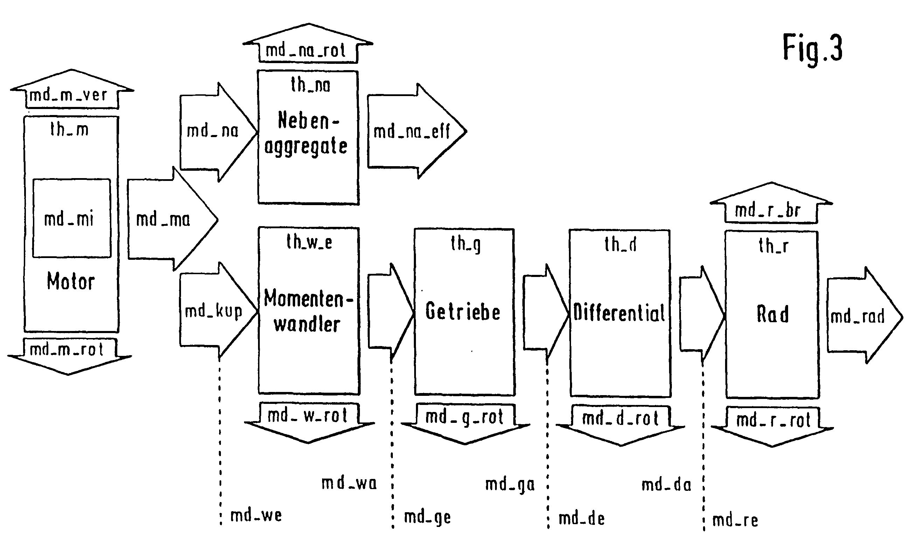

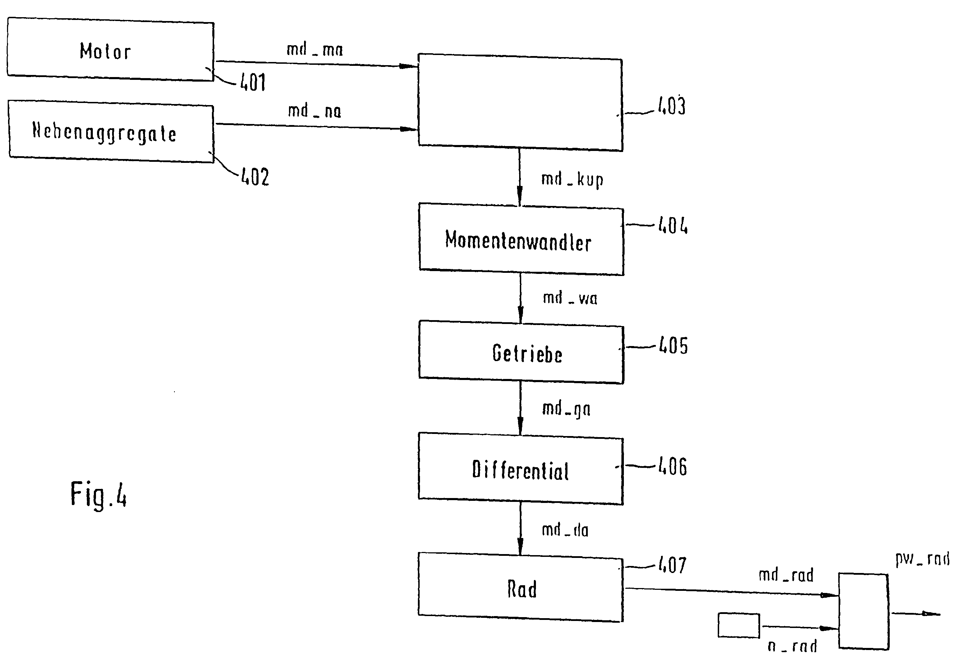

Die Figur 1 zeigt eine Prinzipskizze zur Fahzwiderstandsermittelung, während die Figur 2 die Ermittlung der erwarteten Längsbeschleunigung darstellt. Die Figur 3 offenbart die Drehmomentverhältnisse im Antriebstrang und die Figur 4 gibt den Ablauf der Ermittlung der von den Rädern abgegebenen Antriebsleistung an.

Ausführungsbeispiele

Die Erfindung soll im folgenden anhand eines Ausführungsbeispiels näher erläutert werden.

Durch Vergleich der erwarteten Längsbeschleuningung $a\_L,erw$ mit der tatsächlichen Längsbeschleunigung $a\_L$ kann der Fahrwiderstand ermittelt werden. Dazu ist es erforderlich, die tatsächliche Fahrzeugbeschleunigung zu bestimmen. Diese wird über ein Zeitintervall $[t_0-T, t_0]$ ermittelt. In diesem Zeitintervall ist ebenfalls die erwartete Beschleunigung zu ermitteln.

Das Prinzip und die Einflußgrößen auf die reale Beschleunigung sind in der Figur 1 dargestellt. Mit dem Block 102 ist das reale Fahrzeug gekennzeichnet, das bestimmten Größen (z.B. Fahrbahnsteigung/-gefälle, Fahrzeugmasse, Rollwiderstandsbeiwert, Windgeschwindigkeit, Luftdichte, Luftwiderstandsbeiwert/cw-Wert) unterliegt, die den Fahrwiderstand beeinfussen. Aufgrund der in der Summe von den Fahrzeugrädern abgegebenen Leistung $pw\_rad$ realisiert das reale Fahrzeug 102 die momentan vorliegende Längsbeschleinigung $a\_L$.

Zur Bestimmung des Fahrwiderstands bestimmt man einen Wert $a\_L,erw$ für die zu erwartende Längsbeschleunigung mittels eines Fahrzeugreferenzmodells 101. Die wichtigste Eingangsgröße für die Bestimmung der zu erwartenden Längsbeschleunigung $a\_L,erw$ ist auch hier die in der Summe von den Fahrzeugrädern abgegebene Leistung $pw\_rad$.

Wie erwähnt erfolgt die Ermittlung der erwarteten Längsbeschleunigung $a\_L,erw$ auf der Grundlage der in der Summe von den Rädern des Fahrzeuges abgegebenen Antriebsleistung $pw\_rad$.

Die Figur 2 zeigt die Berechnungsvorschrift zur Ermittlung der erwarteten Längsbeschleunigung $a\_L,erw$. Diese ist über das Zeitintervall $[t_0-T, t_0]$ zu mitteln.

Hierzu wird in dem noch zu beschreibenden Block 201 die in der Summe von den Rädern abgegebene Leistung $pw\_rad$ ermittelt. Von diesem Wert werden in den Verknüpfungen 202 und 203 die in den Blöcken 205 und 206 ermittelten Verlustleistungen $pw\_luft$ und $pw\_roll$ zur Überwindung des Luft- und Rollwiderstandes subtrahiert. Hierbei können diese Verlustleistungen wie folgt ermittelt werden:

$$\texttt{pw\_luft = 0.5 * rho\_luft * cw * (v\_fzg)}^3 \texttt{ * A}$$

$$\texttt{pw\_roll = f\_roll * m\_fzg * g * v\_fzg,}$$

mit $rho\_luft$ als Luftdichte, $cw$ als Luftwiderstandsbeiwert, $A$ als Stirnfläche, $v\_fzg$ als Fahrzeuglängsgeschwindigkeit, $m\_fzg$ als Fahrzeugmasse und $g$ als Erdbeschleunigung.

Im Block 204 wird der unter Berücksichtigung des Luft- und Rollwiderstands ermittelte Leistungswert durch das Produkt aus der Fahrzeugmasse $m\_fzg$ und Fahrzeuglängsgeschwindigkeit $v\_fzg$ dividiert, um die erwartete Längsbeschleunigung a_L,erw zu erhalten.

Die Erfassung der am realen Fahrzeug wirkenden tatsächlichen Längsbeschleunigung a_L geschieht im Block 211 beispielsweise durch eine Auswertung der Raddrehzahlen.

Durch einen Vergleich der tatsächlichen Längsbeschleunigung a_L mit der erwarteten Längsbeschleunigung a_L,erw wird im Block 210 der aktuelle Fahrwiderstand FW ermittelt. Dieser Wert FW wird dann in der Antriebstrangsteuerung 212 weiterverarbeitet, beispielsweise zur Adaption der Schaltkennlinien an den momentan vorliegenden Fahrwiderstand.

Der Rechenblock Antrieb 201 liefert die in der Summe von den Rädern abgegebene Leistung. Diese bestimmt sich zu:

$$pw\_rad = md\_rad * n\_rad$$

Dabei ist md_rad das in der Summe von den angetriebenen Rädern abgegebene Moment und n_rad die mittlere Raddrehzahl der angetriebenen Räder.

Das Moment md_rad wird durch Betrachtung der im Antriebstrang übertragenen Momente ermittelt.

Bei der Bestimmung der übertragenen Momente wird bei jeder Komponente des Antriebstrangs das zur Beschleunigung oder Verzögerung erforderliche Rotationsmoment berücksichtigt, das sich als Produkt aus Massenträgheitsmoment und Winkelbeschleunigung ergibt. Die Figur 3 zeigt dazu die Zuordnung der Größen zu den einzelnen Komponenten im Antriebstrang.

Die verwendeten Abkürzungen beziehen sich auf Eingangs-, Ausgangs- und interne Größen der Komponenten. Die Komponenten sind nicht notwendigerweise identisch mit Bauteilen im Antriebstrang. Es werden folgende Komponenten betrachtet:

- Der Motor mit dem effektiven Motorträgheitsmoment th_m, angetrieben durch das indizierte Moment md_mi und behaftet mit dem Verlustmoment md_m_ver.
- Die Nebenaggregate, wobei als Nebenaggregate alle mechanisch in einem festen Übersetzungsverhältnis mit der Motorkurbelwelle verbundenen Aggregate (z.B. Stromgenerator, Klimaanlage) betrachtet werden. Sie greifen in der Summe das Moment md_na von der Kurbelwelle ab und haben in der Summe ein Massenträgheitsmoment th_na.
- Der Momentenwandler, der sowohl hydrodynamische Wandler als auch Reibkupplungen umfaßt. Er ist durch ein eingangsseitiges Massenträgheitsmoment th_w_e und durch ein ausgangsseitiges Massenträgheitsmoment th_w_a gekennzeichnet.
- Das Getriebe umfaßt beispielsweise Handschaltgetriebe, Stufenautomatgetriebe und stufenlose Umschlingungsgetriebe. Es ist durch ein effektives Trägheitsmoment th_g gekennzeichnet, das übersetzungsabhängig ist.
- Das Differentialgetriebe, wobei in dem hier betrachteten Antriebstrang von einem Einspurmodell ausgegangen wird. Somit verfügt das Differentialgetriebe über nur eine Ausgangsdrehzahl. Es ist durch das effektive Massenträgheitsmoment th_d gekennzeichnet.
- Das Rad. Es steht stellvertretend für alle vier Räder des Fahrzeugs und ist durch das Massenträgheitsmoment th_r gekennzeichnet.

Zur Bestimmung von md_rad wird von jeder Komponente des Antriebstrangs das Ausgangsmoment berechnet. Dabei werden folgende Größen herangezogen:

| | |
|---|---|
| md_mi | Motor: indiziertes Moment (das durch den Verbrennungsvorgang bewirkte Moment) |
| md_m_ver | Motor: Summe der Verlustmomente |
| md_m_rot | Motor: Rotationsmoment |
| md_ma | Motor: Ausgangsmoment |
| md_na | Nebenaggregate: Summe der aufgenommenen Momente |
| md_na_rot | Nebenaggregate: Summe der Rotationsmomente, bezogen auf die Kurbelwelle |
| md_na_eff | Nebenaggragate: Summe der effektiv genutzten Momente |
| md_kup | Kupplungsmoment |
| md_we | Momentenwandler: Eingangsmoment |
| md_w_rot | Momentenwandler: Summe der Rotationsmomente |
| md_wa | Momentenwandler: Ausgangsmoment |
| md_ge | Getriebe: Eingangsmoment |
| md_g_rot | Getriebe: Rotationsmoment |

md_ga  Getriebe: Ausgangsmoment
md_de  Differential: Eingangsmoment
md_d_rot Differential: Rotationsmoment
md_da  Differential: Summe der Ausgangsmomente
md_an  Antriebsmoment
md_rbr  Rad: Summe der Bremsmomente
md_r_rot Rad: Summe der Rotationsmomente
md_rad  Rad: Summe der Radmomente

Anhand der Figur 4 soll nun die Berechnung von md_rad dargestellt werden. Dabei gibt die einer Größe nachgesetzte Bezeichung "_dot" die zeitliche Ableitung dieser Größe an. Weiterhin ist pi = 3.14159. Beim Getriebe und Differential wird das Massenträgheitsmoment vereinbarungsgemäß auf die Eingangsseite bezogen.

-  Rechenblock 401 (Motor):

$$\texttt{md\_ma = md\_mi - md\_mver - md\_m\_rot,}$$

$$\texttt{md\_m\_rot = 2 * pi * th\_m * n\_m\_dot}$$

-  Rechenblock 402 (Nebenaggregate) :

$$\texttt{md\_na = md\_na\_eff + md\_na\_rot}$$

$$\texttt{md\_na\_rot = 2 * pi * th\_na * n\_m\_dot}$$

-  Rechenblock 403 (Kupplungsmoment):

$$\texttt{md\_kup = md\_ma - md\_na}$$

-  Rechenblock 404 (Momentenwandler):

$$\texttt{md\_wa = [(md\_we - md\_w\_rot\_e) * mue\_w] - md\_w\_rot\_a}$$

$$\texttt{md\_w\_rot\_e = 2 * pi * th\_w\_e * n\_we\_dot}$$

$$\texttt{md\_w\_rot\_a = 2 * pi * th\_w\_a * n\_wa\_dot,}$$

wobei mue_w die stationäre Momentenübersetzung des Momentenwandlers ist.

-  Rechenblock 405 (Getriebe):

$$\texttt{md\_ga = (md\_ge - md\_g\_rot) * mue\_g,}$$

$$\texttt{md\_g\_rot = 2 * pi * th\_g * n\_ge\_dot,}$$

wobei mue_g die stationäre Momentenübersetzung des Getriebes iss.

- Rechenblock 406 (Differential):

$$md\_da = (md\_de - md\_d\_rot) * mue\_d,$$

$$md\_d\_rot = 2 * pi * th\_d * n\_de\_dot,$$

wobei mue_d die stationäre Momentenübersetzung des Differentials ist.

- Rechenblock 407 (Rad):

$$md\_rad = md\_an - md\_r\_br - md\_r\_rot,$$

$$md\_r\_rot = 2 * pi * th\_r * n\_rad\_dot$$

Zusammenfassend ist zu bemerken, daß durch die Berücksichtigung des zur Verzögerung oder Beschleunigung jeder einzelnen Komponente des Antriebstrangs erforderlichen Momentes das Moment md_rad genauer berechnet wird als in bisher bekannten Verfahren. Dadurch erhöht sich die Güte des Ermittlungsalgorithmus.

Durch die physikalische Basierung der Ermittlung entfällt eine Applikation empirischer Kenngrößen. Dadurch wird der Applikationsaufwand reduziert.

Die Aufteilung des Ermittlungsverfahrens in Komponenten erlaubt eine einfache Variantenbildung. So muß z.B. bei einer Änderung der Übersetzungsstufen des verbauten Getriebes lediglich der Rechenblock 405 in Figur 4 modifiziert werden. Eine Anpassung globaler Kenngrößen wie bei der Berücksichtigung der Rotationsmomente durch eine "Rotationsgesamtmasse" ist nicht erforderlich.


**Patentansprüche**

1. Elektronische Fahrwiderstandserkennung zur Bestimmung einer den Fahrwiderstand bei einem Kraftfahrzeug repräsentierenden Größe (FW), wobei im Antriebstrang des Fahrzeugs rotierbare Elemente angeordnet sind, zu denen wenigstens ein Fahrzeugmotor, ein in seiner Übersetzung veränderbares Getriebe und das Fahrzeug antreibende Fahrzeugräder gehören, umfassend:

   - Mittel (211) zur Erfassung einer die momentane Beschleunigung des Fahrzeugs repräsentierenden Beschleunigungsgröße (a_L),
   - Mittel (201-209) zur Ermittlung einer die erwartete Beschleunigung des Fahrzeugs repräsentierenden Referenzgröße (a_L,erw),
   - Mittel (210) zur Bestimmung der den Fahrwiderstand bei einem Kraftfahrzeug repräsentierenden Größe (FW) abhängig von einem Vergleich der erfassten Beschleunigungsgröße (a_L) mit der ermittelten Referenzgröße (a_L,erw),

   **dadurch gekennzeichnet, dass**

   - die Mittel (201-209) zur Ermittlung einer die erwartete Beschleunigung des Fahrzeugs repräsentierenden Referenzgröße (a_L,erw) Teilermittlungen (401-407) aufweisen, die den im Antriebsstrang des Fahrzeugs angeordneten rotierbaren Elementen zugeordnet sind,
   - wobei allen rotierbaren Elementen des Antriebsstrangs jeweils eine Teilennittlung zugeordnet ist, in der das Rotationsmoment (md_rad, md_m_rot, md_na_rot, md_w_rot_e, md_w_rot_a, md_g_rot, md_d_rot, md_r_rot) des zugeordneten rotierbaren Elementes und in Abhängigkeit davon das Ausgangmnoment (md_ma, md_na, md_kup, md_wa, md_ga, md_da, md_rad) des zugeordneten rotierbaren Elementes separat ermittelt wird und
   - wobei das durch eine Teilermittlung ermittelte Ausgangsmoment eines rotierbaren Elementes der Teilermittelung des im Antriebstrang nachfolgend angeordneten rotierbaren Elementes übergeben wird,

- dass abhängig von den ermittelten Rotationsmomenten eine Radantriebsmomentengröße (md_rad), die das von den Rädern abgegebene Moment repräsentiert, gebildet wird und die Referenzgröße (a_L,erw) abhängig von der Radantriebsmomentengröße (md_rad) gebildet wird und dass
- bei einer Änderung eines im Antriebsstrang angeordneten Elements lediglich der Teil der Ermittlung, der diesem Element zugeordnet ist, modifiziert wird.

2. Elektronische Fahrwiderstandserkennung nach Anspruch 1, **dadurch gekennzeichnet, dass** in jeder Teilermittlung jeweils eine Drehbewegungsgröße (n_m_dot, n_we_dot, n_wa_dot, n_ge_dot, n_de_dot, n_rad), die die momentane Drehbewegung des dieser Teilermittlung zugeordneten rotierbaren Elementes repräsentiert, erfasst wird, und dass das jeweilige von der Teilermittlung erfasste Rotationsmoment in Abhängigkeit von der erfassten momentanen Drehbewegung des jeweiligen Elements ermittelt wird, wobei insbesondere vorgesehen ist, dass die Drehbewegungsgrößen (n_m_dot, n_we_dot, n_wa_dot, n_ge_dot, n_de_dot, n_rad) die momentanen Drehbeschleunigungen der Elemente erfassen.

## Claims

1. Electronic detection of tractive resistance in order to determine a variable (FW) which represents the tractive resistance in a motor vehicle, with rotatable elements being arranged in the drive train of the vehicle and being associated with at least one vehicle engine, a gearbox with a variable transmission ratio and vehicle wheels which drive the vehicle, comprising:

- means (211) for sensing an acceleration variable (a_L) which represents the instantaneous acceleration of the vehicle,
- means (201-209) for determining a reference variable (a_L,erw) which represents the anticipated acceleration of the vehicle,
- means (210) for determining the variable (FW) which represents the tractive resistance in a motor vehicle, as a function of a comparison between the sensed acceleration variable (a_L) and the reference variable (a_L,erw) which is determined,

**characterized in that**

- the means (201-209) have, for the purpose of determining a reference variable (a_L,erw) which represents the anticipated acceleration of the vehicle, partial determination means (401-407) which are assigned to the rotatable elements which are arranged in the drive train of the vehicle,

- wherein in each case a partial determination in which the rotation torque (md_rad, md_m_rot, md_na_rot, md_w_rot_e, md_w_rot_a, md_g_rot, md_d_rot, md_r_rot) of the assigned rotatable element is assigned to all the rotatable elements of the drive train and the output torque (md_ma, md_na, md_kup, md_wa, md_ga, md_da, md_rad) of the assigned rotatable element is determined separately as a function thereof, and
- wherein the output torque, determined by means of a partial determination, of a rotatable element is transferred for the partial determination of the rotatable element which is arranged next in the drive train,

- **in that** a wheel drive torque variable (md_rad) which represents the torque which is output by the wheels is formed as a function of the rotation torques which are determined, and the reference variable (a_L, erw) is formed as a function of the wheel drive torque variable (md_rad), and **in that**
- when an element which is arranged in the drive train changes, only the part of the determination which is assigned to this element is modified.

2. Electronic detection of tractive resistance according to Claim 1, **characterized in that** in each case a rotational movement variable (n_m_dot, n_we_dot, n_wa_dot, n_ge_dot, n_de_dot, n rad) which represents the instantaneous rotational movement of the rotatable element which is assigned to this partial determination is sensed in each partial determination, and **in that** the respective rotational torque which is sensed by the partial determination is determined as a function of the sensed instantaneous rotational movement of the respective element, wherein in particular there is provision for the rotational movement variables (n_m_dot, n_we_dot, n_wa_dot, n_ge_dot, n_de_dot, n_rad) to sense the instantaneous rotational acceleration values of the elements.

## Revendications

1. Détection électronique de la résistance à l'avancement pour déterminer une grandeur (FW) représentant la résistance à l'avancement d'un véhicule automobile, selon lequel des éléments rotatifs sont installés dans la ligne de transmission du véhicule, comprenant au moins le moteur du véhicule, une boite de vitesses modifiant le rapport de transmission et les roues motrices du véhicule, comprenant

   - des moyens (211) pour saisir une grandeur d'accélération (a_L) représentant l'accélération instantanée du véhicule,
   - des moyens (201-209) pour déterminer une grandeur de référence (a_L, erw) représentant une accélération prévisible du véhicule,
   - des moyens (210) pour déterminer la grandeur (FW) représentant la résistance à l'avancement du véhicule en fonction d'une comparaison entre la grandeur d'accélération saisie (a_L) et la grandeur de référence obtenue (a_L, erw),

   **caractérisée en ce que**
   les moyens (201-209) comportent des moyens de détermination partielle (401-407) pour déterminer une grandeur de référence (a_L, erw) représentant l'accélération prévisible du véhicule, ces moyens étant associés aux éléments rotatifs installés dans la ligne de transmission du véhicule,
   un moyen de détermination partielle respectif étant associé à tous les éléments rotatifs de la ligne de transmission et ce moyen détermine le couple de rotation torque (md_rad, md_m_rot, md_na_rot, md_w_rot_e, md_w_rot_a, md_g_rot, md_d_rot, md_r_rot) de l'élément rotatif associé et en fonction de cela, il détermine le couple de sortie (md_ma, md_na, md_kup, md_wa, md_ga, md_da, md_rad) de l'élément rotatif associé et le couple de sortie obtenu par un moyen de détermination partielle d'un élément rotatif est transmis au moyen de détermination partielle de l'élément rotatif installé en aval dans la ligne de transmission,

   - en fonction du couple de rotation obtenu, on forme une grandeur de couple d'entraînement de roue (md_rad) représentant le couple fourni par les roues et on forme la grandeur de référence (a_L, erw) en fonction de la grandeur du couple d'entraînement de roue (md_rad), et

   pour une variation d'un élément de la ligne de transmission, on modifie uniquement la partie du moyen de détermination associé à cet élément.

2. Détection électronique de la résistance à l'avancement selon la revendication 1,
   **caractérisée en ce que**
   dans chaque moyen de détermination partielle on saisit chaque fois une grandeur de mouvement de rotation (n_mdot, n_we_dot, n_wa_dot, n_ge_dot, n_de_dot, n_rad) qui représente le mouvement de rotation instantané de l'élément rotatif associé à ce moyen de détermination partielle, et
   le couple de rotation saisi chaque fois par le moyen de détermination partielle se détermine en fonction du mouvement de rotation instantanée saisi de l'élément respectif,
   et il est notamment prévu que les grandeurs de mouvement de rotation (n_mdot, n_we_dot, n_wa_dot, n_ge_dot, n_de_dot, n_rad) saisissent les accélérations de rotation instantanée des éléments.

EP 0 944 498 B1

**Fig.1**

| 101 |
| --- |
| Fahrzeugreferenzmodell |

a_L.erw →

pw_rad

Steigung/Gefälle

Fahrzeugmasse

Rollwiderstandsbeiwert

Windgeschwindigkeit

Luftdichte

cw-Wert

| reales Fahrzeug |
| --- |

a_L →

102

Fig.2

Fig.3

EP 0 944 498 B1

md_na_rot

md_m_ver

th_na

**Nebenaggregate**

md_na
md_na_eff

th_m

md_mi

md_ma

md_r_br

th_w_e

th_g

th_d

th_r

**Motor**

md_kup

**Momentenwandler**

**Getriebe**

**Differential**

**Rad**

md_rad

md_m_rot

md_w_rot

md_g_rot

md_d_rot

md_r_rot

md_wa

md_ga

md_da

md_we

md_ge

md_de

md_re

EP 0 944 498 B1

**Fig.4**